# EUROPEAN PATENT APPLICATION

(11) **EP 0 780 661 A1**
(43) Date of publication of application: **25.06.1997**
(21) Application number: 96309256.4
(22) Date of filing: 18.12.1996
(51) Int. Cl.: G01B 7/06, G01L 1/22, G07D 7/00

(54) **A displacement measuring device**

(30) Priority: 22.12.1995 GB 9526333
(71) Applicant: NCR INTERNATIONAL INC., Dayton, Ohio 45479 (US)
(72) Inventor: Logie, Alexander W., West Lothian EH48 4DA (GB)
(74) Representative: Robinson, Robert George

(57) **Abstract**

The present invention relates to a displacement measuring device, characterized by a metal cantilever (4) of constant width and having substantially symmetrical convex parabolic main surfaces (9, 14) tapering towards its free end (10). The device also includes a strain gauge (12) bonded to one of the main surfaces (9, 14) and arranged to provide a signal indicative of the amount of displacement of said free end (10) from a home position. The invention has application, for example, to a multiple note detect device.

## Description

The present invention relates to a displacement measuring device. The invention has application in particular to a device adapted to measure the thickness of an object in transit, by measuring the displacement, due to the passage of the object, of engagement means which engages the object.

The device which is the subject of the present invention may be employed in a variety of applications in which it is desired to measure the thickness of objects, such as record media or bank notes, traversing a feed path.

One such application is in an apparatus for detecting the passage of superposed currency notes in an automated teller machine (ATM).

In a cash dispensing module of an ATM, it is important to provide a simple and reliable means for detecting when a currency note has become superposed on another in a path of travel from a currency supply means to a note exit slot, since such superpositioning may produce an undesirable result such as the dispensing of an excessive amount of money. For convenience, two or more notes which have become disposed in a superposed relationship will hereinafter be referred to as a multiple note.

It is an object of the present invention to provide a reliable and robust device for measuring displacement which is of simple construction.

According to one aspect of the present invention there is provided a displacement measuring device ,characterized by a metal cantilever of constant width and having substantially symmetrical convex parabolic main surfaces tapering towards its free end, and a strain gauge bonded to one of said main surfaces and arranged to provide a signal indicative of the amount of displacement of said free end from a home position.

According to another aspect of the present invention there is provide a method for measuring displacement, characterized by the steps of: providing a cantilever of constant width and having substantially symmetrical convex parabolic main surfaces tapering towards its free end; producing a signal indicative of the displacement of said free end from a home position; and providing a strain gauge bonded to one of said main surfaces where said strain gauge is arranged to produce said signal.

It should be understood that a device in accordance with the present invention has the advantage that a consistent output is provided by the strain gauge even though the strain gauge may be located at any one of a number of different positions along the length of the cantilever. This is because the strain on the cantilever due to deviation of the free end of the cantilever is uniform along its length by virtue of the symmetrical parabolic configurations of the main surfaces of the cantilever. If the strain gauge where bonded to a cantilever of uniform cross-section, then the strain gauge would have to be carefully positioned or carefully calibrated, for each application of the device, as the strain on the cantilever due to displacement of the free end of the cantilever increases towards the free end.

An embodiment of the present invention will now be described, by way of example, with reference to the accompanying drawings, in which:
Fig. 1A is a schematic plan view of a multiple note detect device in accordance with the present invention;
Fig. 1B is a schematic side view of the device of Fig. 1 with no note present between the upper and lower rollers of the device;
Fig. 2 is a side view similar to Fig. 1B device of Fig. 1 but showing single or multiple note present between the rollers;
Fig. 3 is an enlarged perspective view of a cantilever of the device of Figs 1 and 2; and
Fig. 4 is a block diagram of parts of a cash dispensing module including the device of Figs. 1, 2 and 3.

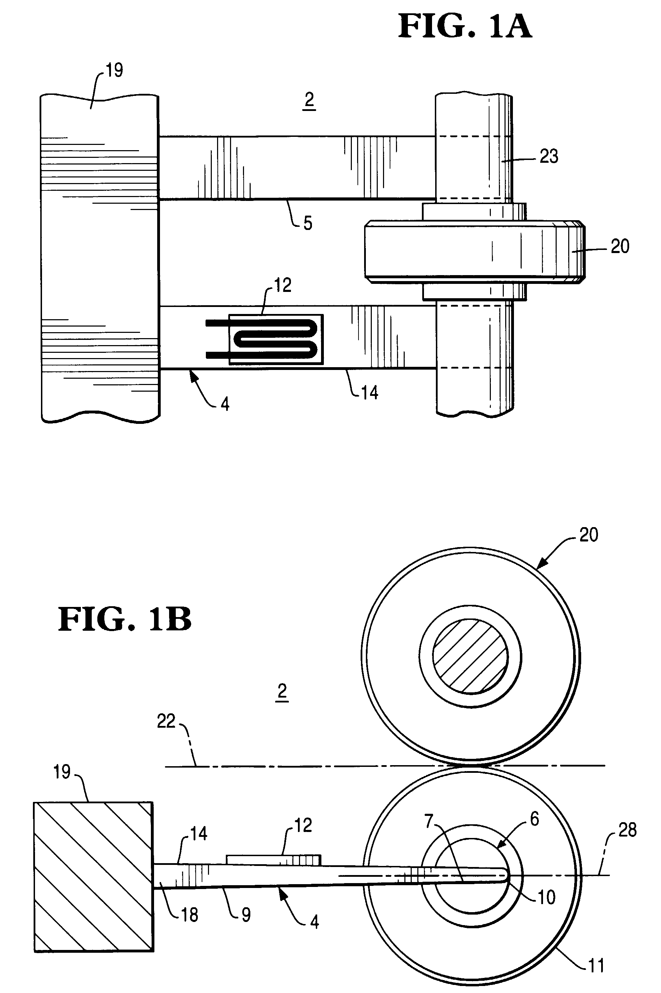

Figs 1 to 4 show a multiple note detect device 2 adapted for use in a cash dispensing module of an ATM (not shown). The device 2 comprises two steel cantilevers 4 and 5 which are arranged so as to support a shaft 6 therebetween. The ends of the shaft 6 are provided with shoulders 7 which are respectively secured to the lower surfaces 9 of the cantilevers 4, 5 adjacent the free ends 10 of the cantilevers 4, 5. A first roller 11 is rotatably mounted on the shaft 6 between the cantilevers 4 and 5.

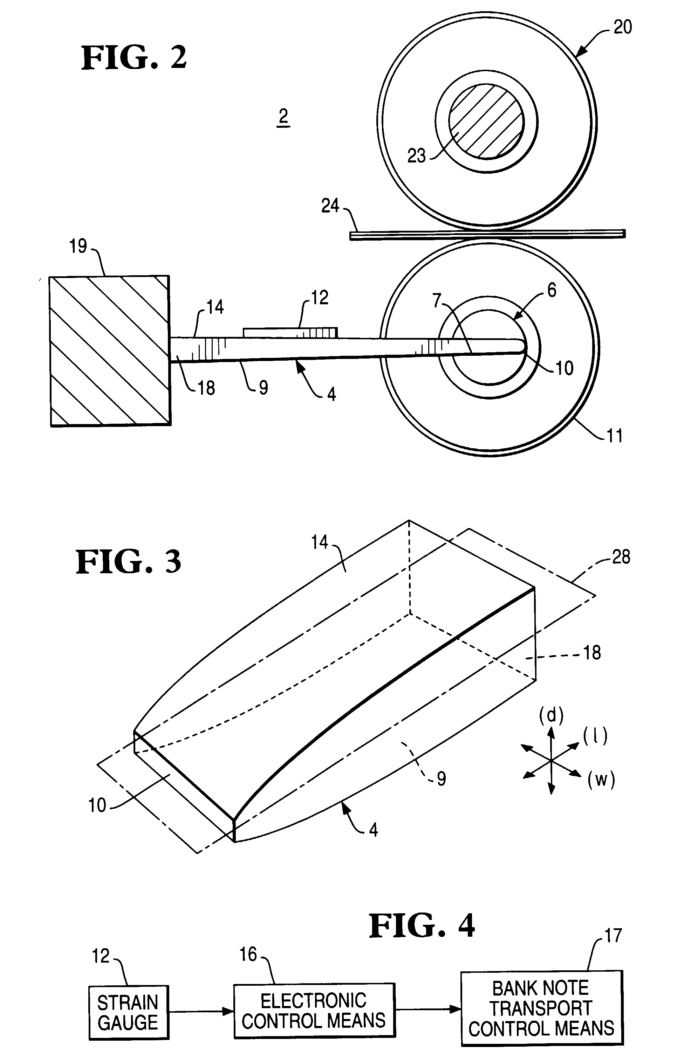

The device 2 also includes a strain gauge 12, which is aligned parallel to the edges of the cantilever 4 and which is bonded by means of a suitable epoxy resin adhesive to the upper surface 14 of the cantilever 4. The strain gauge 12 is connected to an electronic control means 16 (Fig. 3) in the cash dispensing module. The electronic control means 16 is in turn connected to a bank note transport control means 17, in the cash dispensing module, which controls the operation of the bank note transport means within said module.

The ends 18 of the cantilevers 4, 5, opposite to the free ends 10, are secured to a fixed support number 19 such that any deviation of the free ends 10 of the cantilevers 4, 5 will result in a bending force being applied to the cantilevers 4, 5 which will in turn result in a strain on the cantilevers 4, 5.

The device 2 is arranged such that the first roller 11 is located in the bank note transport means beneath a second roller 20 in cooperative relationship therewith, such that the bank note feed path 22 runs between the two rollers 11, 20. The second roller 20 is mounted on a fixed shaft 23 so as to rotate but not to deviate from its position with respect to the feed path 22. Thus the passage of a single or multiple note 24 along the feed path 22 between the rollers 11, 20 will result in a displacement of the first roller 11 as illustrated in Fig. 2.

The strain on the cantilever 4 due to the passage of the single or multiple note 24 between the feed rollers 11, 20 can be measured using the strain gauge 12 on the upper surface 14 of the cantilever 4.

In a cantilever of constant cross-sectional area, the strain on the cantilever due to the deviation of the free end of the cantilever will vary along its length, as discussed above. However, with the configuration of the cantilever 4 in accordance with the present invention the strain is substantially uniform along the entire length of the cantilever 4. Thus the strain gauge 12 will produce the same signal for a given displacement of the free end 10 of the cantilever 4 regardless of the location of the strain gauge 12 along the length of the cantilever 4, provided that the strain gauge 12 is correctly orientated with respect to the edges of the cantilever 4. This phenomenon results from the special shape of the cantilever 4, with the upper 14 and lower 9 surfaces of the cantilever 4 being formed as symmetrical convex parabolic curves tapering towards the free end 10 of the cantilever 4, with the length (1) of each cantilever from the end 10 varying as the square of the depth (d) of the cantilever 4 from the central plane 28 of the cantilever 4 (Fig. 3). The width (w) of the cantilever 4 remains constant along its length (1). The cantilever 5 has the same shape as the cantilever 4.

In use, the device 2 is installed in the feed path 22 of the cash dispensing module of the ATM. The device is installed such that the feed path 22 runs between the first and second rollers 11, 20 such that no bending force is applied to the cantilever 4 and consequently no strain is present on the cantilever 4 when no bank notes 24 are present between the rollers 11, 20.

When a single or multiple bank note 24 is transported along the feed path 22 and engages the rollers 11, 20 the bank note 24 forces the first roller 11 downwards with respect to the second roller 20 and thus causes a strain on the cantilever 4, which is measured by the strain gauge 12. The strain gauge 12 then produces a signal dependent on the strain on the cantilever 4 to which it is bonded, which is proportional to the deviation of the free end 10 of the cantilever 4. The signal is forwarded to the electronic control means 16. The electronic control means 16 then makes a decision as to the magnitude of the displacement of the roller 11 and consequently as to whether the bank note 24 transported along the feed path 22 is a single or multiple note. The electronic control means 16 then instructs the bank note transport control means 17, within the cash dispensing module, to transport the bank note 24 along a selected one of two feed paths (not shown), dependent on whether a single or multiple bank note is present. Thus, if a single bank note 24 is present then the bank note transport control means 17 will cause the bank note 24 to be transported along a feed path to a bank note exit slot (not shown) in the ATM. However, if the electronic control means 16 has determined that a multiple note 24 is present, then the bank note transport control means 17 will cause the multiple note 24 to be diverted along a secondary feed path (not shown) to a bank note retention bin within the cash dispensing module.

Although the invention has been described in terms of use in a cash dispensing module of an ATM the invention can be utilised in any device in which deviation measurement is required and is not limited to use in a bank note transport means.

## Claims

1. A displacement measuring device, characterized by a metal cantilever (4) of constant width and having substantially symmetrical convex parabolic main surfaces (9, 14) tapering towards its free end(10), and a strain gauge (12) bonded to one of said main surfaces (9, 14) and arranged to provide a signal indicative of the amount of displacement of said free end (10) from a home position.

2. A device according to claim 1, characterized in that a first engagement means (11) is mounted adjacent said free end (10) of the cantilever (4) and is arranged to engage an object (24) whose thickness is to be assessed, the amount of said displacement being dependent on the thickness at said object.

3. A device according to claim 2, characterized in that a second engagement means (20) is mounted so as to contact said first feed means (11) prior to displacement of the cantilever (4) from said home position, and said second engagement means (20) is mounted so as not to move from its position with respect to a feed path (22) lying between said first and second engagement means (11, 20).

4. A device according to claim 3, characterized in that each of said first and second engagement means (11,20) is in the form of a roller.

5. A device according to any one of claims 2 to 4, characterised in that said first engagement means (11) is supported by and positioned between said free end (10) of said cantilever (4) and the free end (10) of a second cantilever (5) similar in shape to the previously mentioned cantilever (4).

6. A method for measuring displacement, characterized by the steps of: providing a cantilever (4) of constant width and having substantially symmetrical convex parabolic main surfaces (9,14) tapering towards its free end (10); producing a signal indicative of the displacement of said free end (10) from a home position; and providing a strain gauge (12) bonded to one of said main surfaces (9,14) where said strain gauge (12) is arranged to produce said signal.
